# EUROPÄISCHE PATENTSCHRIFT

(11) **EP 3 164 407 B1**
(45) Veröffentlichungstag und Bekanntmachung des Hinweises auf die Patenterteilung: **15.08.2018**
(21) Anmeldenummer: 15731963.3
(22) Anmeldetag: 29.06.2015
(51) Int. Cl.: C07F 7/21

(54) **VERFAHREN ZUR HERSTELLUNG VON SILOXANEN AUS ALKALISALZEN VON SILANOLEN**
METHOD FOR PRODUCING SILOXANES FROM ALKALI SALTS OF SILANOLS
PROCÉDÉ DE PRODUCTION DE SILOXANES À PARTIR DE SELS ALCALINS DE SILANOLS

(30) Priorität: 01.07.2014 DE 102014212698
(43) Veröffentlichungstag der Anmeldung: 10.05.2017
(73) Patentinhaber: Wacker Chemie AG, 81737 München (DE)
(72) Erfinder: STEPP, Michael, A-5122 Überackern (AT); KOLLER, Herbert, 84547 Emmerting (DE)
(74) Vertreter: Fritz, Helmut
(86) Internationale Anmeldenummer: PCT/EP2015/064719
(87) Internationale Veröffentlichungsnummer: WO 2016/001154

(56) Entgegenhaltungen:
- EP-A1- 1 548 020
- EP-A1- 1 550 664
- US-A1- 2005 009 982
- US-A1- 2005 250 925
- YULIA A. POZDNIAKOVA ET AL: "Alkali-Metal-Directed Hydrolytic Condensation of Trifunctional Phenylalkoxysilanes", EUROPEAN JOURNAL OF INORGANIC CHEMISTRY, Bd. 2004, Nr. 6, 1. März 2004 (2004-03-01) , Seiten 1253-1261, XP055210301, ISSN: 1434-1948, DOI: 10.1002/ejic.200300583

## Beschreibung

Die Erfindung betrifft ein Verfahren zur Herstellung von Siloxanen aus Alkalisalzen von Organosilanolen (im Folgenden auch als Siliconate bezeichnet) bei denen das Molverhältnis von Alkalikation zu Silicium < 1 beträgt mit Halogensilanen.

Definierte cyclische Siloxane der allgemeinen Formel (1)

[RSi(OSiR¹R²R³)O]ₙ (1)

sind von großem industriellem Interesse u.a. als hochreaktive Vernetzer z.B. für optische, elektronische und Hochtemperaturanwendungen, als thermisch beständige Lösungsmittel, als Komplexbildner, als Fluide für kosmetische Anwendungen und als potenzielle Bausteine für Siloxan-Harze. Ihre Herstellung war bislang sehr aufwändig und deshalb unwirtschaftlich und für den großtechnischen Maßstab ungeeignet.

In US 2567110 **(Corning Glass, 1947)** wird ganz allgemein ein Verfahren zur Herstellung von Organosiloxanen durch Umsetzung von Alkali-Salzen von Organosilanolen mit Chlorsilanen beschrieben. In der Beschreibung kommen zwar cyclische Strukturen für Salze von Organosilanolen (RSiOOAlkali)ₙ vor, jedoch keine daraus ableitbaren cyclischen Siloxane der Struktur (RSiOSiR'₃O)ₙ. Bei den Salzen der Mono-Organosilanole beträgt das Verhältnis Alkali:Si jeweils 1, 2 oder 3. In den einzigen Beispielen mit Monoorganosilanol-Salzen (Bsp. 1: Natriummethylsiliconat, Bsp. 2 Natriumphenylsiliconat) führen die Umsetzungen mit Trimethylchlorsilan in einem Lösungsmittelgemisch jeweils zu hochmolekularen Polysiloxanen.

JP 2013-241497 **(Nat. Univ. Corp. Gunma Univ., 2012)** beschreibt die Herstellung von Natrium- oder Kaliumsiliconaten ausgehend von C₂-C₈-Trialkoxysilanen und Natronlauge oder Kalilauge in einem Lösungsmittel. Feste Produkte werden durch Filtration und Trocknung des Filterkuchens erhalten. Das Alkali:Si-Verhältnis beträgt dabei 1:1. Diese Siliconate werden anschließend mit Chlorsilanen (z.B. HM2-Silan) in Gegenwart von Lösungsmitteln und Pyridin zu den entsprechenden Cyclosiloxanen (z.B. [MeSi(OSiMe₂H)O]₄) umgesetzt.

Nach Shchegolikhina, O.I. et al., European Journal of Inorganic Chemistry, 2004, 1253-1261**,** werden cyclische Natrium- und Kaliumphenylsiloxanolate aus Phenyltriethoxysilan mit wässriger Natrium- oder Kaliumhydroxid-Lösung gegebenenfalls in Gegenwart von Alkoholen und organischen unpolaren Lösungsmitteln hergestellt. Das Alkali/Si-Verhältnis beträgt jeweils 1:1. Die Reaktionsprodukte werden in Gegenwart von Pyridin mit Trimethylchlorsilan zu den entsprechenden cyclischen Derivaten umgesetzt (cis-[PhSi(OSiMe₃)O]₄ oder ₃).

Shchegolikhina, O.I. et al., Russian Chemical Bulletin, International Edition, Vol. 56, No. 1, pp. 83-90, Jan. 2007**,** beschreibt als Ausgangsmaterialien für die Zielverbindungen Siliconat-Salze mit einem Alkali:Si-Verhältnis von 1:1. Sie werden mit einem großen Überschuss (>8 Eq. bzgl. Siliconat) Trimethylchlorsilan in Gegenwart von Pyridin als Base in hoher Verdünnung in Hexan als Lösungsmittel in die entsprechenden cyclischen Siloxane überführt. Durch den im Kristall gebundenen Alkohol und gegebenenfalls zusätzlichen Wassers aus der Herstellung des Siliconats wird ein Teil des Chlorsilans verbraucht, was die Wirtschaftlichkeit des Prozesses verringert.

Nach Laine, R.M et al., Comptes Rendus Chimie 13, 270-281, 2010**,** wird beispielsweise Octaphenylsilsesquioxan mit einem Überschuss NaOH in Butanol binnen 24-48 h zum entsprechenden cyclischen Natriumsiloxanolat gespalten. Dieses wird mit Methyltrichlorsilan in Methanol zu einem Dimethoxysilylderivat umgesetzt, welches zu einem unsymmetrischen Silsesquioxan ("Janus-Silsesquioxan-Kubus") hydrolysiert/kondensiert werden kann.

DE 602004010461 T2 **(Samsung Electronics Co., 2004)** Beschreibt u.a. multifunktionelle cyclische Siloxanverbindungen wie z.B. [MeSiO(SiMe₂Cl)O]₄ und [MeSiO(SiMe₂-OMe)O]₄.

Nach dem oben angeführten Stand der Technik sind cyclische Produkte der allgemeinen Formel (1)

[RSi(OSiR¹R²R3)O]ₙ (1)

aus den entsprechenden Alkali-Siliconaten der allgemeinen Formel (2a)

RSi(OH)₂OM (2a)

wobei M für ein Alkalimetall, R für einen organischen Rest steht und n = 3, 4, 5, 6, 7 oder 8 bedeutet, oder deren Kondensationsprodukten durch Umsetzung mit Halogensilanen der allgemeinen Formel (3)

R¹R²R³Si-Hal (3)

wobei Hal für einen Halogenrest und **R¹, R²** und **R³** unabhängig voneinander für einen Wasserstoffrest, einen Halogenrest oder einen organischen gegebenenfalls über Sauerstoff gebundenen Rest stehen, zugänglich. Dabei beträgt das Alkali:Silicium-Verhältnis (M:Si) in der allgemeinen Formel (2a) stets 1:1.

Die Siliconate werden dabei entweder durch Umsetzung von einem Mol-Äquivalent Alkoxysilan der allgemeinen Formel (4)

RSi(OR')₃ (4)

oder dessen Hydrolysat mit einem Mol-Äquivalent wässrigem Alkalihydroxid erhalten. R weist die obige Bedeutung auf und R' in Formel (4) steht für einen niederen Alkylrest.

Der hohe Alkaligehalt des Siliconats bedingt, dass bei vollständigem Umsatz zu dem Zielprodukt der allgemeinen Formel (1) pro Mol-Äquivalent Siliconat ein Mol-Äquivalent Alkalisalz anfällt, welches teuer entsorgt oder recycliert werden muss. Ein weiterer Nachteil, der sich aus dem hohen Alkaligehalt ergibt, ist das mit steigendem Alkali-Gehalt zunehmende hygroskopische Verhalten von Salzen, weshalb die nach dem Stand der Technik eingesetzten Siliconate nur schwer von anhaftendem oder im Kristall gebundenen Hydrat-Wasser oder Alkohol zu befreien sind (s. Shchegolikhina, O.I. et al., European Journal of Inorganic Chemistry, 2004, 1253-1261). Aus wirtschaftlichen Gründen ist es aber notwendig, ein wasser- und alkoholfreies Siliconat in die Reaktion mit dem Halogensilan der allgemeinen Formel (3) einzusetzen, da ansonsten ein Teil des Halogensilans für die Reaktion mit den OH-funktionellen Nebenbestandteilen verbraucht wird und der gewünschten Reaktion mit dem Siliconat nicht zur Verfügung steht. Wird nicht vollständig getrocknet, muss für eine maximale Umwandlung des wasser- und alkoholfeuchten Siliconats in das Zielprodukt der allgemeinen Formel (1) ein Überschuss an Halogensilan der allgemeinen Formel (3) eingesetzt werden, was unwirtschaftlich ist, da es zu unerwünschten Nebenprodukten führt, die entsorgt werden müssen. Ein anderer Aspekt ist die Zersetzungsneigung der Siliconate, die sich mit zunehmendem Alkali-Gehalt ebenfalls zu niedrigeren Temperaturen verschiebt und die Trocknungszeiten verlängert (vgl. WO2012/022544). Die in der Fachliteratur bislang beschriebenen Verfahren zur Herstellung der erfindungsgemäßen Siloxane der allgemeinen Formel (1) durch Umsetzung der getrockneten Siliconate der allgemeinen Formel (2a) mit Halogensilanen der allgemeinen Formel (3) verwenden stets ein Lösungsmittel. Diese Lösungsmittel müssen nach der Umsetzung wieder aufwändig von den Zielprodukten der allgemeinen Formel (1) abgetrennt werden.

US20050250925**,** EP1550664**,** EP1548020 und US2005009982 beschreiben die Herstellung von Silsesquioxanen durch Umsetzung von Hydrolyse/Kondensationsprodukten von Alkalisalzen von Silanolen mit Halogensilanen.

Yulia A. Pzdniakova et al. "alkali-Metal-Directed Hydrolytic Condensation of Trifunctional Phenylalkoxysilanes" European Journal of Inorganic Chemistry, Bd. 200, Nr. 6, 01.03.2004, Seiten 1253-1261, beschreibt die Herstellung von cyclischen Siloxanen durch Umsetzung eines cyclischen Alkalisilanolats der Formel [PhSi(O)OM] mit Me₃SiCl. Dabei ist das Molverhältnis von Kation M zu Silicium 1:1.

Aufgabe der Erfindung war es deshalb, ein Verfahren zur Herstellung der Verbindungen der allgemeinen Formel (1) zu finden, das die beschriebenen Nachteile des Standes der Technik nicht aufweist.

Gegenstand der Erfindung ist ein Verfahren zur Herstellung von cyclischen Siloxanen der allgemeinen Formel (1)

[RSi(OSiR¹R²R³)O]ₙ (1)

durch Umsetzung von Alkalisalzen von Silanolen (sogenannten Alkali-Siliconaten) bestehend aus Einheiten der allgemeinen Formel (2)

R-Si(OH)₃₋ₘ(OM)ₘ (2)

von deren Hydrolyse/Kondensationsprodukten, oder von Alkalisalzen von Silanolen der allgemeinen Formel (2) zusammen mit deren Kondensationsprodukten, bei denen das Molverhältnis von Kation M zu Silicium < 1 beträgt,
mit Halogensilanen der allgemeinen Formel (3)

R¹R²R³Si-Hal (3)

wobei
- **m**: für 0, 1, 2 oder 3, durchschnittlich eine Zahl von 0,1 bis < 1
- **n**: für 3, 4, 5, 6, 7 oder 8
- **R**: für einen organischen über Kohlenstoff gebundenen Rest,
- **M**: für ein Alkalikation,
- **Hal**: für einen Halogenrest stehen und
- **R¹, R²** und **R³**: ausgewählt werden aus Wasserstoff, C₁₋₁₀-Alkoxy-, C₁₋₂₀-Aryloxy- oder einwertigen unsubstituierten oder durch Halogenatome oder Alkoxygruppen substituierten Kohlenwasserstoffresten mit 1 bis 18 Kohlenstoffatomen.

Überraschend wurde gefunden, dass Alkali-Siliconate der allgemeinen Formel (2) oder deren Kondensationsprodukte, bei denen das Alkali:Silicium-Verhältnis < 1 ist, bei der Umsetzung mit Halogensilanen der allgemeinen Formel (3) vergleichbare Ausbeuten cyclischer Siloxane der allgemeinen Formel (1) liefern wie die mit einem äquimolaren Verhältnis. Es wurde außerdem gefunden, dass bei den nach WO2012/022544 hergestellten Alkali-Siliconaten bei Alkali:Silicium-Verhältnissen < 1 sogar höhere Anteile cyclischer Siloxan-Strukturen der allgemeinen Formel (1) gebildet werden als im äquimolaren Fall (siehe Beispiele 1).

Die Vorteile des erfindungsgemäßen Verfahrens ergeben sich aus einem niedrigeren Alkaligehalt im Siliconat der allgemeinen Formel (2). Diese alkaliärmeren Siliconate sind leichter und sicherer zu trocknen. Sie binden außerdem weniger Wasser und Alkohol und verbrauchen deshalb keine zusätzlichen Mengen Halogensilan der allgemeinen Formel (3).

Die im Verfahren eingesetzten Alkalisalze von Silanolen bestehend aus Einheiten der allgemeinen Formel (2) und deren Kondensationsprodukte werden nachstehend zusammengefasst als Siliconate A bezeichnet.

Der Rest **R** steht dabei bevorzugt für einen einwertigen Si-C gebundenen unsubstituierten oder durch Halogenatome, C₁₋₆-Alkyl oder C₁₋₆-Alkoxy- oder Silylgruppen substituierten Kohlenwasserstoffrest mit 1 bis 30 Kohlenstoffatomen, in dem eine oder mehrere, einander nicht benachbarte -CH₂-Einheiten durch Gruppen -O-, oder -S- ersetzt sein können. Der Rest **R** kann linear, verzweigt, zyklisch, aromatisch, gesättigt oder ungesättigt sein.

**R** steht bevorzugt für einen einwertigen unsubstituierten oder durch Halogenatome, Alkoxy- oder Silylgruppen substituierten Kohlenwasserstoffrest mit 1 bis 18 Kohlenstoffatomen. Besonders bevorzugt sind unsubstituierte Alkylreste, Cycloalkylreste, Alkylarylreste, Arylalkylreste und Phenylreste. Vorzugsweise weist der Kohlenwasserstoffrest **R** 1 bis 6 Kohlenstoffatome auf. Besonders bevorzugt sind der Methyl-, Ethyl-, Propyl-, 3,3,3-Trifluorpropyl-, Vinyl-, n-Hexyl- und der Phenylrest, ganz besonders der Methylrest und der Vinylrest, insbesondere der Methylrest.

Weitere Beispiele für Reste R sind:
n-Propyl-, 2-Propyl-, Chlormethyl-, Methoxymethyl-, 3-Chlorpropyl-, 2-(Trimethylsilyl)ethyl-, n-Butyl-, 2-Butyl-, 2-Methylpropyl-, t-Butyl-, n-Pentyl-, Cyclopentyl-, n-Hexyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Vinyl-, Allyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropylrest. Weitere Beispiele für **R** sind Reste -(CH₂O)ₒ-R⁸, - (CH₂CH₂O)ₚ-R⁹, und CH₂CH(CH₃)O)_{q}-R¹⁰ wobei **o, p** und **q** Werte von 1 bis 10, insbesondere 1, 2, 3 bedeuten. **R⁸, R⁹** und **R¹⁰** bedeuten vorzugsweise einen unsubstituierten oder durch Halogenatome substituierten Alkylrest mit 1 bis 6 Kohlenstoffatomen. Beispiele für Reste **R⁸, R⁹** und **R¹⁰** sind der Methyl-, der Ethyl, der Propyl-, der Allyl- und der Butylrest, wobei der Methylrest besonders bevorzugt ist.

**M** hat die Bedeutung Lithium, Natrium, Kalium oder Cäsium, wobei Natrium und Kalium bevorzugt und Kalium besonders bevorzugt sind.

Das Molverhältnis M:Si in der allgemeinen Formel (2) dargestellt durch den durchschnittlichen Wert von **m** ist vorzugsweise mindestens 0,1, besonders bevorzugt mindestens 0,4 insbesondere mindestens 0,5 und höchstens 0,95, bevorzugt höchstens 0,85, insbesondere höchstens 0,75.

Wenn **M** die Bedeutung Natrium und Kalium hat, beträgt das Molverhältnis K:Na im eingesetzten Siliconat A vorzugsweise 0,8:0,2 bis 0,4:0,6, insbesondere 0,7:0,3 bis 0,5:0,5.

Vorzugsweise weist **n** die Werte 4, 5 oder 6 auf.

Die Herstellung der erfindungsgemäßen Siliconate erfolgt vorzugsweise nach den in WO2013/041385, WO2012/022544, WO2013/075969. beschriebenen Verfahren.

Die Reste **R¹, R²** und **R³** in dem Halogensilan der allgemeinen Formel (3) stehen für den Wasserstoff-, einen C₁₋₁₀-Alkoxy-, einen C₁₋₂₀-Aryloxy- oder einen einwertigen unsubstituierten oder durch Halogenatome oder Alkoxygruppen substituierten Kohlenwasserstoffrest mit 1 bis 18 Kohlenstoffatomen. Besonders bevorzugt sind Wasserstoff-, C₁₋₆-Alkoxy-, C₁₋₁₀-Aryloxy- sowie unsubstituierte C₁₋₁₀-Alkylreste, C₁₋₁₀-Cycloalkylreste, C₁₋₂₀-Alkylarylreste, C₁₋₂₀-Arylalkylreste und Phenylreste. Ganz besonders bevorzugt sind der Wasserstoff-, Methyl-, Ethyl-, Propyl-, 3,3,3-Trifluorpropyl-, Vinyl-, n-Hexyl- und der Phenylrest, ganz besonders der Methylrest und der Vinylrest, insbesondere der Methylrest.

Weitere Beispiele für Reste **R¹, R², R³** sind: n-Propyl-, 2-Propyl-, Chlormethyl-, Methoxymethyl-, 3-Chlorpropyl-, n-Butyl-, 2-Butyl-, 2-Methylpropyl-, t-Butyl-, n-Pentyl-, Cyclopentyl-, n-Hexyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Ethinyl-, Allyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropylrest.

Vorzugsweise handelt es sich bei den Halogensilanen der allgemeinen Formel (3) um Chlorsilane.

Beispiele für Chlorsilane der allgemeinen Formel (3) sind SiCl₄, HSiCl₃, MeSiCl₃, ViSiCl₃, Allyl-SiCl₃, PhSiCl₃, HSiMeCl₂, H₂SiCl₂, Me₂SiCl₂, ViSiMeCl₂, PhSiMeCl₂, H₃SiCl, Me₃SiCl, HSiMe₂Cl, ViSiMe₂Cl, PhSiMe₂Cl, Allyl-SiMe₂Cl, F₃C-CH₂CH₂-SiMe₂Cl, (EtO)₃SiCl, (MeO)₃SiCl, (EtO)₂SiMeCl, (MeO)₂SiMeCl, EtOSiMe₂Cl, MeOSiMe₂Cl, Cl-CH₂-SiMe₂Cl, Cl-CH₂-SiMeCl₂, Cl-CH₂-SiCl₃.

Besonders bevorzugt sind Me₃SiCl, HSiMe₂Cl, ViSiMe₂Cl, PhSiMe₂Cl, Cl-CH₂-SiMe₂Cl und Allyl-SiMe₂Cl, insbesondere Me₃SiCl, HSiMe₂Cl und ViSiMe₂Cl.

Die Halogensilane werden bei der Methylchlorsilansynthese vorzugsweise nach dem Müller-Rochow-Prozess hergestellt, oder können als Folgeprodukte durch chemische Reaktionen nach bekannten Verfahren hergestellt werden (z.B. Hydrosilylierung, nucleophile Substitution, radikalische Substitution) und sind zumeist kommerziell erhältlich.

Die Verbindungen der allgemeinen Formel (1) werden nach dem erfindungsgemäßen Verfahren durch Umsetzung der Siliconate A mit den Halogensilanen der allgemeinen Formel (3) erhalten. Dies kann durch Zugabe des Siliconat A zum Halogensilane oder umgekehrt durch Zugabe des Halogensilans zum Siliconat A erfolgen. Dabei liegt vorteilhafterweise zumindest eine Komponente in flüssiger Form z.B. suspendiert oder gelöst vor. Die meisten Halogensilane sind bei Raumtemperatur unter Normaldruck flüssig, die Siliconate A fest. Es bietet sich deshalb an, die Siliconate A in einem inerten Lösungsmittel zu lösen oder aufzuschlämmen und die flüssigen Halogensilane pur oder gelöst in einem inerten Lösunsmittel zu dosieren, um eine möglichst rasche Reaktion aufgrund der guten Durchmischung zu gewährleisten. Als Lösungsmittel kommen vorzugsweise aprotische polare und unpolare organische Lösungsmittel zum Einsatz, beispielsweise lineare, verzweigte oder cyclische Alkane wie n-Pentan, n-Hexan, n-Heptan, n-Octan, Isohexan, Isooctan, Cyclohexan, Aromaten wie Benzol, Toluol, o-Xylol, m-Xylol, p-Xylol, Ether wie Diethylether, Dipropylether, Dibutylether, Methyl-t-butylether, Phenylmethylether, Diphenylether, Tetrahydrofuran, Dioxan, Tetrahydropyran, 4-Methyltetrahydropyran, Ethylenglykoldimethylether, Diethylenglykoldimethylether, Triethylenglykoldimethylether, Ethylenglykoldibutylether oder Siloxane, wie Hexamethyldisiloxan, Octamethyltrisiloxan, Octamethylcyclotetrasiloxan, Decamethylcyclopentasiloxan, Methyl-tris-trimethylsiloxysilan oder Gemische verschiedener Lösungsmittel.

Zum Abfangen des bei der Reaktion gebildeten Halogenwasserstoffs kann eine Hilfsbase zugesetzt werden. Als Hilfsbase können basische Salze oder stickstoffhaltige Verbindungen wie Amine, Harnstoffe, Imine, Guanidine, Amide eingesetzt werden. Beispiele für basische Salze sind Natriumcarbonat, Natriumhydrogencarbonat, Kaliumcarbonat, Kaliumhydrogencarbonat, Calciumcarbonat, Calciumhydrogencarbonat, Calciumoxid, Magnesiumcarbonat, Magnesiumoxid. Beispiele für stickstoffhaltige Verbindungen sind Ammoniak, Ethylamin, Butylamin, Trimethylamin, Triethylamin, Tributylamin, Harnstoff, Tetramethylharnstoff, Guanidin, Tetramethylguanidin, N-Methylimidazol, N-Ethylimidazol, Piperidin, Pyridin, Picolin. Vorzugsweise kommen Stickstoffverbindungen zum Einsatz, bei denen die Stickstoffatome keinen Wasserstoff tragen.

Vorzugsweise wird die Hilfsbase mindestens äquimolar bezüglich des Siliconats A eingesetzt. Pro Mol-Äquivalent Silicium im Siliconat A werden vorzugsweise mindestens 0,5, besonders bevorzugt mindestens 1,0, insbesondere mindestens 2,0 Basenäquivalente Hilfsbase eingesetzt. Es können auch größere Zusatzmengen Hilfsbase eingesetzt werden, diese bringen jedoch meist keinen Vorteil, sondern verringern die Raum-Zeit-Ausbeute und damit die Wirtschaftlichkeit des Verfahrens. Bevorzugt wird die Hilfsbase mit dem Siliconat A vorgelegt und das Halogensilan der allgemeinen Formel (3) zudosiert. Es können aber auch beide Edukte parallel zur Hilfsbase dosiert werden, wobei die Hilfsbase vorgelegt wird. Es können auch Gemische verschiedener Hilfsbasen eingesetzt werden.

In einer bevorzugten Form des erfindungsgemäßen Verfahrens wird das Siliconat A mit dem Halogensilan der allgemeinen Formel (3) ohne Hilfsbase und ohne Lösungsmittel direkt umgesetzt. Hierbei kommt ein weiterer Vorteil des erfindungsgemäßen Verfahren zum Tragen: das Siliconat A enthält aufgrund des geringeren Alkalianteils freie SiOH-Gruppen, die bei der Reaktion des Halogensilans der allgemeinen Formel (3) gasförmigen Halogenwasserstoff entwickeln. Dieser kann problemlos in die Produktionsprozesse beispielsweise in einen Chlorwasserstoffverbund zurückgeführt und damit kostengünstig recycliert werden. Wenn keine Hilfsbase zugegen ist, wird das Siliconat A vorzugsweise zu dem Halogensilan dosiert. Vorzugsweise wird dabei das gebildete Halogenwasserstoffgas durch einen Inertgasstrom ausgeschleppt oder mittels reduziertem Druck aus der Reaktionsmischung sofort nach der Entstehung entfernt, um unerwünschte Nebenreaktionen zwischen dem Siliconat A und dem Halogenwasserstoff zu vermeiden.

Vorzugsweise wird das Halogensilan der allgemeinen Formel (3) mindestens äquimolar bezüglich des Siliconats A eingesetzt. Pro Mol-Äquivalent Siliconat-Silicium werden vorzugsweise mindestens 0,5, besonders bevorzugt mindestens 1,0, insbesondere mindestens 1,5 Mol-Äquivalente Halogensilan der allgemeinen Formel (3) eingesetzt.

Vorzugsweise werden pro Mol-Äquivalent Siliconat A höchstens 30 Mol-Äquivalente, besonders bevorzugt 10 Mol-Äquivalente, insbesondere höchstens 6 Mol-Äquivalente Halogensilan eingesetzt. Der Überschuss an Halogensilan der allgemeinen Formel (3) wird dabei umso höher gewählt, je größer der Anteil an siliciumgebundenem Halogen im Silan der allgemeinen Formel (3) ist, um inter- und intramolekulare Kondensationsreaktionen zu vermeiden, die unkontrolliert zu vernetzten Strukturen führen können.

Es können auch Gemische verschiedener Halogensilane der allgemeinen Formel (3) und Siliconate A eingesetzt werden. Auch ist es möglich, insbesondere bei Einsatz einer Hilfsbase das Siliconat A sukzessive zuerst mit einem unterstöchiometrischen Anteil Halogensilan der allgemeinen Formel (3) und danach mit einem zweiten Halogensilan der allgemeinen Formel (3) umzusetzen. Dadurch sind auch Siloxane der allgemeinen Formel (1) mit unterschiedlichen Einheiten SiR¹R²R³ zugänglich.

Die Umsetzung des Siliconats A mit dem Halogensilan der allgemeinen Formel (3) wird vorzugsweise bei einer Temperatur von mindestens -20°C, besonders bevorzugt von mindestens 0°C, insbesondere mindestens 10°C durchgeführt. Die maximal erreichbare Temperatur ergibt sich darüber hinaus aus dem Siedepunkt der niedrigstsiedenden Komponente.
Um Zersetzung des Siliconats A zu vermeiden übersteigt die Reaktionstemperatur 200°C vorzugsweise nicht, besonders bevorzugt liegen die Reaktionstemperaturen bei maximal 120°C insbesondere bei maximal 70°C.
Dabei kann die Reaktionsmischung sowohl gekühlt als auch geheizt werden, es können auch einzelne Komponenten auf eine bestimmte Temperatur gebracht werden, bevor sie miteinander in Kontakt kommen, z.B. um die Reaktionswärme nutzen zu können.

Das Verfahren kann sowohl batchweise z.B. in einem Rührwerk als auch kontinuierlich z.B. in einem Schleifen- oder Rohrreaktor oder einem Wirbelbettreaktor oder einem Schaufeltrockner durchgeführt werden. Sofern das Siliconat A als Feststoff oder Suspension dosiert wird, kann dies über eine Feststoffschleuse (z.B. Förderschnecke oder Zellradschleuse) erfolgen.

Bei der Umsetzung des Siliconats A mit dem Halogensilan der allgemeinen Formel (3) entstehen üblicherweise Gemische verschiedener Siloxane der allgemeinen Formel (1), die sich durch die Ringgröße (Index n) und / oder die sterische Konfiguration unterscheiden können. Gegebenenfalls bilden sich darüber hinaus in untergeordnetem Maße Siloxane als Nebenprodukte, die sich nicht durch eine ringförmige, sondern eine linear verzweigte Struktur auszeichnen. In vielen Fällen können diese Mischungen nach Abtrennung der entstandenen Salze und gegebenenfalls vorhandener Lösungsmittel oder anderer Hilfsstoffe direkt verwendet werden. Sofern jedoch eine Isolierung oder Anreicherung bestimmter Spezies der Reaktionsmischung gewünscht ist, erfolgt diese vorzugsweise durch fraktionierte Destillation oder Kristallisation nach Abtrennung der entstandenen Salze aus der Reaktionsmischung. Die aus dem Alkali-Siliconat und aus der gegebenenfalls eingesetzten Hilfsbase bei der Umsetzung gebildeten Halogenid-Salze können vor oder nach der Destillation oder Kristallisation abfiltriert oder in Wasser gelöst und als wässrige Lösung abgetrennt werden. Für die wässrige Aufarbeitung kann zusätzlich ein Lösungsmittel zugesetzt werden, dessen Löslichkeit in Wasser möglichst gering ist, insbesondere maximal 5 Gew.-% bei 25°C. Vorzugsweise wird ein gegebenenfalls vorhandener Überschuss Halogensilan der allgemeinen Formel (3) vor der wässrigen Aufarbeitung abdestilliert. Die wässrige Aufarbeitung vor der Abtrennung des erfindungsgemäßen Siloxans der allgemeinen Formel (1) ist jedoch dann ungünstig, wenn das Siloxan der allgemeinen Formel (1) besonders feuchtigkeitsempfindliche Reste trägt, z.B. Halogenreste oder Alkoxyreste, oder eine hohe Wasserlöslichkeit aufweist. In diesem Fall ist die Abtrennung der Alkalisalze durch Filtration und anschließende Destillation oder Kristallisation vorzuziehen. Auf die Reinigung kann gegebenenfalls verzichtet werden, wenn die Reinheit des Filtrats für die Verwendung des erfindungsgemäßen Siloxans der allgemeinen Formel (1) ausreicht oder die Nebenprodukte keinen negativen Einfluss auf die Anwendung der Reaktionsmischung haben.

Die Destillation des Zielprodukts aus der gegebenenfalls filtrierten Reaktionsmischung oder der nichtwässrigen Phase und gegebenenfalls dem Extrakt der wässrigen Aufarbeitung kann vorzugsweise aus dem Reaktionsgefäß direkt am kurzen Weg oder in einer klassischen Destillations apparatur wie beispielsweise in einer mit Glockenböden, Festventilböden, Füllkörpern oder Packungen ausgestatteten Rektifikationskolonne oder einem Fallfilm- oder Dünnschichtverdampfer sowie in einer Kurzwegdestillationsanlage batchweise oder (semi)kontinuierlich durchgeführt werden. Es können auch verschiedene Destillationsapparate nacheinander genutzt werden, z.B. können große Mengen Niedersieder wie überschüssiges Halogensilan oder Lösungsmittel aus dem Reaktionsgefäß abdestilliert werden und der Rückstand danach in einer Destillationsapparatur fraktioniert gereinigt werden. Auch die Kristallisation oder gegebenenfalls Sublimation des erfindungsgemäßen Siloxans der allgemeinen Formel (1) stellt eine Möglichkeit der Isolierung oder Reinigung dar.

Aufgrund der Hydrolyseempfindlichkeit der Halogensilane wird die Umsetzung des Siliconats A mit Halogensilan der allgemeinen Formel (3) vorzugsweise unter Feuchtigkeitssauschluss, d.h. in einer getrockneten Atmosphäre oder unter reduziertem Druck, besonders bevorzugt unter Inertgas, wie Stickstoff, CO₂, Argon, Magerluft, bevorzugt bei 900 bis 1100 hPa durchgeführt.

Bevorzugt werden nach dem erfindungsgemäßen Verfahren folgende Siloxane der allgemeinen Formel (1) hergestellt; [Vi-Si(OSiMe₃)O]₄, [Me-Si(OSiMe₃)O]₄, [Ph-Si(OSiMe₃)O]₄, [Ph-Si(OSiMe₂Ph)O]₄, [Ph-Si(OSiMe₃)O]₃, [Ph-Si(OSiMe₂Ph)O]₃, [Vi-Si(OSiMe₂H)O]₄, [Me-Si(OSiMe₂H)O]₄, [Ph-Si(OSiMe₂H)O]₄, [Ph-Si(OSiMe₂H)O]₃, [Vi-Si(OSiMe₂Vi)O]₄, [Me-Si(OSiMe₂Vi)O]₄, [Ph-Si(OSiMe₂Vi)O]₄, [Ph-Si(OSiMe₂Vi)O]₃, [Vi-Si(OSiMe₂Cl)O]₄, [Me-Si(OSiMe₂Cl)O]₄, [Ph-Si(OSiMe₂Cl)O]₄

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 1000 hPa (abs.) durchgeführt.

Der Festgehalt wird jeweils mit der Festgehaltswaage HR73 Halogen Moisture Analyzer von Mettler Toledo bei 160°C bestimmt.

### Beispielserie 1: zeigt die Relation zwischen Alkali/Si-Verhältnis im Siliconat A zum Anteil der gebildeten cyclischen Siloxane (Zielprodukt nicht isoliert)

### a) Herstellung Siliconat-Pulver

Es werden zunächst nach Herstellungsbeispiel 1 in WO2012/022544 (PCT/EP2011/061766) Siliconat-Pulver aus Methyltrimethoxysilan, unterschiedlichen Anteilen KOH bzw. NaOH und Wasser hergestellt. Der Festgehalt lag jeweils bei mindestens 99,5%.

### b) Umsetzung mit Chlorsilan

10 ml Isopar E (isoparaffines Kohlenwasserstoffgemisch mit einem Siedebereich von 113 - 143°C, käuflich erhältlich bei ExxonMobil) werden bei 20°C mit 4 g (0,04 mol) Triethylamin (Aldrich) versetzt, anschliessend erfolgt vorsichtig die Zugabe von jeweils 1 g fein pulverisiertem Siliconat-Pulver (0,008 - 0,0096 mol, je nach K/Na-Gehalt). Man dosiert binnen 10 Minuten unter Rühren 4 g (0,036 mol) Trimethylchlorsilan zu. Dabei erwärmt sich die Mischung und es bildet sich ein weißer Niederschlag. Man lässt 6 Stunden bei 20°C rühren, gibt 7 g (0,388 mol) Wasser zu und lässt weiter 30 Minuten kräftig rühren. Dabei löst sich der Ammoniumchlorid-Niederschlag auf, ungelöste Bestandteile werden abfiltriert und gewogen, die Zusammensetzung der oberen, organischen Phase der zweiphasigen klaren Mischung wird mittels ²⁹Si-NMR bestimmt. Die Ergebnisse sind in Tabelle 1 zusammengestellt.

**Tabelle 1:**

| Beispiel | 1.1*) | 1.2 | 1.3 | 1.4 | 1.5 | 1.6¹⁾ | 1.7 |
|---|---|---|---|---|---|---|---|
| Alkali/Si (Molverhältnisse) | 1,05 K | 0,75 K | 0,65 K | 0,65 K/Na 0,9/0,1 | 0,65 K/Na 0,7/0,3 | 0,65 K/Na 0,6/0,4 | 0,65 K/Na 0,5/0,5 |
| ²⁾ (MT)₄ | 0 | 57,3 | 62 | 69 | 82 | 78 | 74 |
| ³⁾ (M₂T)₂ | 83 | 32 | 34 | 24 | 11,5 | 2,9 | 3,8 |
| ⁴⁾ Unlöslicher Anteil | 8 | 13 | 17 | 17 | 12 | 11 | 14 |

| | | | | | | | |
|---|---|---|---|---|---|---|---|
| *) nicht erfindungsgemäß ¹⁾ eingesetztes Siliconat-Pulver aus Beispiel 7 in WO2012/022544 ²⁾ Molarer Anteil [MeSi(OSiMe₃)O]₄ unter den MeSiO_{3/2} enthaltenden Siliciumverbindungen laut ²⁹Si-NMR (Peaks bei +8,4 ppm, -67 ppm) ³⁾ Molarer Anteil [MeSi(OSiMe₃)₂O_{1/2}]₂ unter den MeSiO_{3/2} enthaltenden Siliciumverbindungen laut ²⁹Si-NMR (Peaks bei +7,3 ppm, -66,1 ppm). ⁴⁾ Gew.-% bzgl. Einwaage Siliconat-Pulver | | | | | | | |

Daraus ist ersichtlich, dass der Anteil des cyclischen Zielprodukts in der Reaktionsmischung mit abnehmendem Alkaligehalt steigt und dass ein bestimmter Natriumanteil die Selektivität erhöht.

### Beispiel 2: [MeSi(OSiMe₂Vi)O]₄

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 181 g (1,5 mol) Vinyldimethylchlorsilan (WACKER CHEMIE AG) vorgelegt. Über die Feststoffschleuse werden unter Rühren 56,5 g (0,5 mol, 0,325 mol Kalium) SILRES BS Pulver S (WACKER CHEMIE AG, Kaliummethylsiliconat-Pulver mit einem Molverhältnis K:Si = 0,65) so zudosiert, dass die Temperatur der Reaktionsmischung 25°C nicht übersteigt (∼3:45h). Man erhitzt anschließend solange auf Rückfluss, bis keine Gasentwicklung mehr feststellbar ist (∼1h). Unter Rühren werden 160 g vollentsalztes Wasser zugesetzt. Die untere Phase wird abgelassen und die obere Phase wird unter reduziertem Druck fraktioniert destilliert. Das Zielprodukt geht bei einem Siedebereich von 120-128°C und 2hPa in die Vorlage über. Man isoliert 31,2 g einer klaren, farblosen Flüssigkeit (=40 % d.Th.), bei der es sich laut ¹H- und ²⁹Si-NMR sowie GC-MS um ein Isomerengemisch des Cyclosiloxan [MeSi(OSiMe₂Vi)O]₄ mit einer Reinheit von 98,5% handelt.

### Beispiel 3: [MeSi(OSiMe₂H)O]₄

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 113,1 g (1,19 mol) Dimethylchlorsilan (WACKER CHEMIE AG) vorgelegt. Über die Feststoffschleuse werden unter Rühren 45 g (0,4 mol, 0,26 mol Kalium) SILRES BS Pulver S (WACKER CHEMIE AG, Kaliummethylsiliconat-Pulver mit einem Molverhältnis K:Si = 0,65) so zudosiert, dass die Temperatur der Reaktionsmischung 25°C nicht übersteigt (∼2h). Man erhitzt anschließend solange auf Rückfluss, bis keine Gasentwicklung mehr feststellbar ist (∼1h). Unter Rühren werden 68 g vollentsalztes Wasser zugesetzt. Die untere Phase wird abgelassen und die obere Phase wird unter reduziertem Druck fraktioniert destilliert. Das Zielprodukt geht bei einem Siedebereich von 100-105°C und 2hPa in die Vorlage über.
Man isoliert 34,1 g einer klaren, farblosen Flüssigkeit (=64 % d.Th.), bei der es sich laut ¹H- und ²⁹Si-NMR sowie GC-MS um ein Isomerengemisch des Cyclosiloxans [MeSi(OSiMe₂H)O]₄ mit einer Reinheit von 98% handelt.

### Beispiel 4: [ViSi(OSiMe₂H)O]₄

### a) Herstellung Kalium-Vinyl-Siliconat (K:Si = 0,65)

In einem mit Stickstoff inertisierten 2l 4-Halskolben mit Flügelrührer, Thermometer, zwei Tropftrichtern und Wasserabscheider mit Kolonnenaufsatz (Kondensator) werden unter Rühren parallel aus den beiden Tropftrichtern 422 g (2,83 mol) Vinyltrimethoxysilan (Geniosil® XL 10 der WACKER CHEMIE AG) und 282 g 36,6 %ige Kalilauge (1,84 mol KOH) binnen 10 Minuten in die auf 22°C temperierte Apparatur dosiert. Durch die freiwerdende Reaktionswärme erwärmt sich die Mischung. Man erhitzt die klare Reaktionsmischung 30 Minuten auf Rückfluss (ca. 72°C) und nimmt danach 142,9 g Destillat ab. Anschließend werden 800 g Isopar E (isoparaffines Kohlenwasserstoffgemisch mit einem Siedebereich von 113 - 143°C, käuflich erhältlich bei ExxonMobil) zugesetzt. Man erhitzt am Wasserabscheider auf Rückfluss. Das Destillat trennt sich als untere Phase im Wasserabscheider ab. Bis zu einer Siedetemperatur von 118°C sammeln sich 228,8 g klares farbloses Destillat, das mit dem ersten Destillat vereinigt wird. Die gaschromatografische Analyse der vereinigten Destillate ergibt einen Gehalt von 73,2 % Methanol, 26,6 % Wasser und 0,2 % Isopar E. Die Hydrolyse der Methoxyreste im Vinyltrimethoxysilan ist demnach quantitativ. Während der Destillation scheidet sich ein pastöser weißer Feststoff in der Reaktionsmischung ab, der zunehmend in feine Partikel zerfällt und eine Suspension ausbildet. Nach der azeotropen Trocknung wird das Lösungsmittel bei 120°C abdestilliert und der feste Rückstand eine Stunde bei 120°C und 10 hPa getrocknet. Es werden 326,5 g feines, weißes, rieselfähiges Pulver erhalten, dessen Feststoffgehalt bei 99,5% liegt (bestimmt mit der Festgehaltswaage HR73 Halogen Moisture Analyzer von Mettler Toledo bei 160°C). Daraus lässt sich eine mittlere Molmasse für das Kalium-Vinylsiliconat von 115 g/mol errechnen.

### b) Herstellung des Siloxans [ViSi(OSiMe₂H)O]₄

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 114,6 g (1,2 mol) Dimethylchlorsilan (WACKER CHEMIE AG) bei -15°C vorgelegt. Über die Feststoffschleuse werden unter Rühren 50 g (0,43 mol, 0,28 mol Kalium) des Kalium-Vinyl-Siliconats aus a) so zudosiert, dass die Temperatur der Reaktionsmischung 25°C nicht übersteigt (45 Minuten). Man erhitzt anschließend solange auf Rückfluss, bis keine Gasentwicklung mehr feststellbar ist (∼1h). Unter Rühren wird eine Lösung aus 37,5 g Ethanol in 112,5 g vollentsalztem Wasser zugesetzt. Die untere Phase wird abgelassen und die obere Phase wird unter reduziertem Druck fraktioniert destilliert. Das Zielprodukt geht bei einem Siedebereich von 135-137°C und 4hPa in die Vorlage über.
Man isoliert 21,6 g einer klaren, farblosen Flüssigkeit (=34 % d.Th.), bei der es sich laut ¹H- und ²⁹Si-NMR um ein Isomerengemisch des Cyclosiloxans [VinylSi(OSiMe₂H)O]₄ mit einer Reinheit von 94% handelt.

### Beispiel 5: [ViSi(OSiMe₂Vi)O]₄

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 147,6 g (1,2 mol) Vinyldimethylchlorsilan (WACKER CHEMIE AG) bei 20°C vorgelegt. Über die Feststoffschleuse werden unter Rühren 50 g (0,43 mol, 0,28 mol Kalium) des Kalium-Vinyl-Siliconats aus Beispiel 4a) so zudosiert, dass die Temperatur der Reaktionsmischung 25°C nicht übersteigt (85 Minuten). Man erhitzt anschließend solange auf Rückfluss, bis keine Gasentwicklung mehr feststellbar ist (∼1h). Unter Rühren wird eine Lösung aus 20 g Ethanol in 150 g vollentsalztem Wasser zugesetzt. Die untere Phase wird abgelassen und die obere Phase wird unter reduziertem Druck fraktioniert destilliert. Das Zielprodukt geht bei einem Siedebereich von 120-166°C und 4hPa in die Vorlage über.
Man isoliert 20,3 g einer klaren, farblosen Flüssigkeit (=28 % d.Th.), bei der es sich laut ¹H- und ²⁹Si-NMR um ein Isomerengemisch des Cyclosiloxans [VinylSi(OSiMe₂Vinyl)O]₄ mit einer Reinheit von 93% handelt.

### Beispiel 6: [ViSi(OSiMe₃)O]₄

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 132,9 g (1,2 mol) Trimethylchlorsilan (WACKER CHEMIE AG) bei 21°C vorgelegt. Über die Feststoffschleuse werden unter Rühren 50 g (0,43 mol, 0,28 mol Kalium) des Kalium-Vinyl-Siliconats aus Beispiel 4a) so zudosiert, dass die Temperatur der Reaktionsmischung 25°C nicht übersteigt (120 Minuten). Man erhitzt anschließend solange auf Rückfluss, bis keine Gasentwicklung mehr feststellbar ist (∼1h). Unter Rühren wird eine Lösung aus 50 g Ethanol in 150 g vollentsalztem Wasser zugesetzt. Die untere Phase wird abgelassen und die obere Phase wird unter reduziertem Druck fraktioniert destilliert. Das Zielprodukt geht bei einem Siedebereich von 120-130°C und 5hPa in die Vorlage über.
Man isoliert 24,8 g einer klaren, farblosen Flüssigkeit (=37 % d.Th.), bei der es sich laut ¹H- und ²⁹Si-NMR um ein Isomerengemisch des Cyclosiloxans [VinylSi(OSiMe₃)O]₄ mit einer Reinheit von 97% handelt.

### Vergleichsbeispiel V1:

### a) Herstellung Kalium-Vinyl-Siliconat (K:Si = 1)

In analoger Vorgehenseise zu Beispiel 4a) werden 300 g (2 mol) Vinyltrimethoxysilan (Geniosil® XL 10 der WACKER CHEMIE AG) mit 251,4 g 45 %ige Kalilauge (2 mol KOH) umgesetzt. Die klare Reaktionsmischung wird anschließend mit 1200 g Isopar E (isoparaffines Kohlenwasserstoffgemisch mit einem Siedebereich von 113 - 143°C, käuflich erhältlich bei ExxonMobil) azeotrop getrocknet. Es werden 260 g feines, weißes, rieselfähiges Pulver erhalten, dessen Feststoffgehalt bei 98,5% liegt (bestimmt mit der Festgehaltswaage HR73 Halogen Moisture Analyzer von Mettler Toledo bei 160°C). Daraus lässt sich eine mittlere Molmasse für das Kalium-Vinylsiliconat von 128 g/mol errechnen.

### b) Umsetzung des Kalium-Vinylsiliconats 6a) mit Trimethylchlorsilan

In einem mit Stickstoff inertisierten 0,51 5-Halskolben mit Flügelrührer, Thermometer, Feststoffschleuse und 20cm-Vigreuxkolonne mit Kolonnenaufsatz (Kondensator) werden 156,4 g (1,44 mol) Trimethylchlorsilan (WACKER CHEMIE AG) bei 22°C vorgelegt. Über die Feststoffschleuse werden unter Rühren 50 g (0,39 mol, 0,39 mol Kalium) des Kalium-Vinyl-Siliconats aus Vergleichsbeispiel V1a) so zudosiert, dass die Temperatur der Reaktionsmischung 25°C nicht übersteigt (120 Minuten). Man erhitzt anschließend solange auf Rückfluss, bis keine Gasentwicklung mehr feststellbar ist (∼1h). Unter Rühren wird eine Lösung aus 125 g Ethanol in 125 g vollentsalztem Wasser zugesetzt. Zur Verbesserung der Phasentrennung werden 13,3 g Kochsalz zugesetzt. Die wässrige, untere Phase wird abgelassen. Beim Versuch, die obere, organische Phase unter reduziertem Druck zu destillieren, bildet sich ein fester, nichtdestillierbarer Rückstand, der einen Schmelzpunkt >300°C aufweist.

## Patentansprüche

1. Verfahren zur Herstellung von cyclischen Siloxanen der allgemeinen Formel (1)
[RSi(OSiR¹R²R³)O]ₙ (1)
durch Umsetzung von Alkalisalzen von Silanolen (sogenannten Alkali-Siliconaten) bestehend aus Einheiten der allgemeinen Formel (2)
R-Si(OH)₃₋ₘ(OM)ₘ (2)
von deren Hydrolyse/Kondensationsprodukten, oder von Alkalisalzen von Silanolen der allgemeinen Formel (2) zusammen mit deren Kondensationsprodukten, bei denen das Molverhältnis von Kation M zu Silicium < 1 beträgt, mit Halogensilanen der allgemeinen Formel (3)
R¹R²R³Si-Hal (3)
wobei
**m** für 0, 1, 2 oder 3, durchschnittlich eine Zahl von 0,1 bis < 1
**n** für 3, 4, 5, 6, 7 oder 8
**R** für einen organischen über Kohlenstoff gebundenen Rest,
**M** für ein Alkalikation,
**Hal** für einen Halogenrest stehen und
**R¹, R²** und **R³** ausgewählt werden aus Wasserstoff, C₁₋₁₀-Alkoxy-, C₁₋₂₀-Aryloxy- oder einwertigen unsubstituierten oder durch Halogenatome oder Alkoxygruppen substituierten Kohlenwasserstoffresten mit 1 bis 18 Kohlenstoffatomen.

2. Verfahren nach Anspruch 1, bei dem **R** einen einwertigen Si-C gebundenen unsubstituierten oder durch Halogenatome, C₁₋₆-Alkyl oder C₁₋₆-Alkoxy- oder Silylgruppen substituierten Kohlenwasserstoffrest mit 1 bis 30 Kohlenstoffatomen, in dem eine oder mehrere, einander nicht benachbarte -CH₂-Einheiten durch Gruppen -O-, oder -S- ersetzt sein können bedeutet.

3. Verfahren nach einem oder mehreren der vorangehenden Ansprüche, bei dem **M** ausgewählt wird aus Natrium und Kalium.

4. Verfahren nach einem oder mehreren der vorangehenden Ansprüche, bei dem das Molverhältnis M:Si in der allgemeinen Formel (2) 0,4 bis 0,85 beträgt.

5. Verfahren nach einem oder mehreren der vorangehenden Ansprüche, bei dem die Halogensilane der allgemeinen Formel (3) Chlorsilane sind.

6. Verfahren nach einem oder mehreren der vorangehenden Ansprüche, bei dem die Umsetzung bei 0°C bis 120°C durchgeführt wird.

7. Verfahren nach einem oder mehreren der vorangehenden Ansprüche, bei dem die Umsetzung ohne Hilfsbase durchgeführt wird.

## Claims

1. Process for preparing cyclic siloxanes of the general formula (1)
[RSi(OSiR¹R²R³)O]ₙ (1)
by reaction of alkali metal salts of silanols (known as alkali metal siliconates) consisting of units of the general formula (2)
R-Si(OH)₃₋ₘ(OM)ₘ (2),
of their hydrolysis/condensation products, or of alkali metal salts of silanols of the general formula (2) together with their condensation products, wherein the molar ratio of cation M to silicon is < 1,
with halosilanes of the general formula (3)
R¹R²R³Si-Hal (3)
where
**m** is 0, 1, 2 or 3 and on average is a number from 0.1 to < 1,
**n** is 3, 4, 5, 6, 7 or 8,
**R** is an organic radical bonded via carbon,
**M** is an alkali metal cation,
**Hal** is a halogen radical, and
**R¹, R²,** and **R³** are selected from hydrogen, C₁₋₁₀ alkoxy radicals, C₁₋₂₀ aryloxy radicals or monovalent hydrocarbon radicals having 1 to 18 carbon atoms which are unsubstituted or substituted by halogen atoms or alkoxy groups.

2. Process according to Claim 1, wherein **R** is a monovalent, Si-C-bonded hydrocarbon radical having 1 to 30 carbon atoms, which is unsubstituted or substituted by halogen atoms, C₁₋₆ alkyl or C₁₋₆ alkoxy or silyl groups and in which one or more mutually nonadjacent -CH₂- units may have been replaced by -O- or -S- groups.

3. Process according to one or more of the preceding claims, wherein **M** is selected from sodium and potassium.

4. Process according to one or more of the preceding claims, wherein the molar ratio M:Si in of the general formula (2) is 0.4 to 0.85.

5. Process according to one or more of the preceding claims, wherein the halosilanes of the general formula (3) are chlorosilanes.

6. Process according to one or more of the preceding claims, wherein the reaction is carried out at 0°C to 120°C.

7. Process according to one or more of the preceding claims, wherein the reaction is carried out without auxiliary base.

## Revendications

1. Procédé de fabrication de siloxanes cycliques de formule générale (1) :
[RSi(OSiR¹R²R³)O]ₙ (1)
par mise en réaction de sels alcalins de silanols (dits siliconates alcalins) constitués par des unités de formule générale (2) :
R-Si(OH)₃₋ₘ(OM)ₘ (2)
de leurs produits d'hydrolyse/de condensation ou de sels alcalins de silanols de formule générale (2) conjointement avec leurs produits de condensation, le rapport molaire entre le cation M et le silicium étant < 1,
avec des halogénosilanes de formule générale (3) :
R¹R²R³Si-Hal (3)
dans lesquelles
**m** représente 0, 1, 2 ou 3, en moyenne un nombre de 0,1 à < 1,
**n** représente 3, 4, 5, 6, 7 ou 8,
**R** représente un radical organique relié par un carbone,
**M** représente un cation alcalin,
**Hal** représente un radical halogène, et
**R¹, R²** et **R³** sont choisis parmi l'hydrogène, les radicaux alcoxy en C₁₋₁₀, aryloxy en C₁₋₂₀ ou les radicaux hydrocarbonés monovalents de 1 à 18 atomes de carbone non substitués ou substitués par des atomes d'halogène ou des groupes alcoxy.

2. Procédé selon la revendication 1, selon lequel **R** signifie un radical hydrocarboné monovalent de 1 à 30 atomes de carbone, relié à Si-C, non substitué ou substitué par des atomes d'halogène, des groupes alkyle en C₁₋₆ ou alcoxy en C₁₋₆ ou silyle, dans lequel une ou plusieurs unités -CH₂- non voisines les unes des autres peuvent être remplacées par des groupes -O- ou -S-.

3. Procédé selon une ou plusieurs des revendications précédentes, selon lequel **M** est choisi parmi le sodium et le potassium.

4. Procédé selon une ou plusieurs des revendications précédentes, selon lequel le rapport molaire M:Si dans la formule générale (2) est de 0,4 à 0,85.

5. Procédé selon une ou plusieurs des revendications précédentes, selon lequel les halogénosilanes de formule générale (3) sont des chlorosilanes.

6. Procédé selon une ou plusieurs des revendications précédentes, selon lequel la réaction est réalisée à une température de 0 °C à 120 °C.

7. Procédé selon une ou plusieurs des revendications précédentes, selon lequel la réaction est réalisée sans base auxiliaire.
